# EUROPÄISCHE PATENTANMELDUNG

(11) **EP 4 497 917 A1**
(43) Veröffentlichungstag der Anmeldung: **29.01.2025**
(21) Anmeldenummer: 24190656.9
(22) Anmeldetag: 24.07.2024
(51) Int. Cl.: F02B 19/00

(54) **VERBRENNUNGSMOTOR MIT VORKAMMER**

(30) Priorität: 28.07.2023 CH 8202023
(71) Anmelder: Liebherr Machines Bulle SA, 1630 Bulle (CH)
(72) Erfinder: FRAGNIÈRE, Oliver, 1791 Courtaman (CH); ANDREUTTI, Roberto, 6917 Barbengo (CH); SEBA, Dr. Bouzid, 1632 Riaz (CH); RICCA, Fabio, 1009 Pully (CH)
(74) Vertreter: von Tietzen und Hennig, Nikolaus

(57) **Zusammenfassung**

Die Erfindung betrifft einen Verbrennungsmotor mit Vorkammer, insbesondere ein Gasmotor, umfassend einen Hauptbrennraum in einem Zylinder des Verbrennungsmotors zum Verbrennen eines Kraftstoff-Luftgemisches und eine aktive Vorkammer mit einer darin hineinragenden Zündvorrichtung zur Zündung eines in der Vorkammer befindlichen Kraftstoff-Luft-Gemisches und mit einem der Vorkammer Kraftstoff zuführenden Vorkammer-Injektor, wobei wenigstens ein Vorkammer-Modul (10) vorgesehen ist, das als zum Zylinderkopf separates Bauteil ausgeführt und in den Zylinderkopf eingesetzt ist, und wobei das Vorkammer-Modul einen die Vorkammer bildendenden Hohlraum mit wenigstens einem Überströmkanal zur fluidischen Verbindung von Vorkammer und Hauptbrennraum umfasst, dadurch gekennzeichnet, dass das Vorkammer-Modul zur funktionsgerechten Fixierung des Vorkammer-Injektors und/oder der Zündvorrichtung dient und die Längsachse einer der in das Vorkammer-Modul eingesetzten Komponenten aus Vorkammer-Injektor oder Zündvorrichtung schräg zur Längsachse des Hauptbrennraums verläuft.

## Beschreibung

Die Erfindung betrifft einen Verbrennungsmotor mit Vorkammer, insbesondere ein Gasmotor, umfassend einen Hauptbrennraum in einem Zylinder des Verbrennungsmotors zum Verbrennen eines Kraftstoff-Luftgemisches und eine aktive Vorkammer.

Vorbekannt sind Brennraum-Einheiten mit aktiver Vorkammer in drei unterschiedlichen Ausbaustufen. Die als erste bekannte und am weitesten verbreitete Variante - im Folgetext als Konzept I bezeichnet - betrifft eine aktive Vorkammer, die lediglich die Funktion eines Zündverstärkers ausübt. Eine zweite Variante entspricht einer Brennraum-Einheit, in deren Hauptbrennraum lediglich über einen einzigen, über die aktive Vorkammer erstreckenden Pfad Kraftstoff zugeführt werden kann. Diese Variante wird Fortan als Konzept II bezeichnet. Darüberhinausgehend sind Brennraum-Einheiten mit aktiver Vorkammer bekannt, die wahlweise eine Kraftstoffzuführung über die aktive Vorkammer oder alternativ über einen zweiten Kraftstoffpfad bspw. mittels einer Saugrohreinspritzung ermöglichen. Eine entsprechende Ausführungsform, bei der bauartbedingt die Haupteinspritzung zur Abdeckung des im Hauptbrennraum erforderlichen Kraftstoffbedarfs nur innerhalb eines gewissen Teilbereichs des Motorarbeitsbereichs vollständig entlang des sich über die Vorkammer erstreckenden Kraftstoffpfads erfolgen kann, soll im Folgetext als Konzept IIIa bezeichnet werden. Eine entsprechende Ausführungsform, bei der obgleich des Vorhandenseins eines sich über den Saugeingang erstreckenden Kraftstoffpfades der sich über die Vorkammer erstreckende Kraftstoffpfad entsprechend ausgelegt ist, dass der Verbrennungsmotor innerhalb seines gesamten Drehzahl-Drehmoment-Arbeitsbereichs ausnahmslos über die Vorkammer erfolgen kann, soll im Folgetext als Konzept IIIb bezeichnet werden.

Rein konzeptionell, d.h. aus einer Schaltbildperspektive, erscheint die Umsetzung dieser Konzepte recht einfach zu sein. Tatsächlich ist die konstruktive Umsetzung für heutige Motoren mit ihrer entsprechend hohen Leistungsdichte nicht trivial. Eine entsprechend ausreichende Energiemenge aus der primären Zündeinheit kommend muss sich stets funktionsgerecht und demgemäß reproduzierbar in der Vorkammer ausbreiten und zwar zur Sicherstellung, dass der Zündvorgang des sich innerhalb der Vorkammer befindenden Kraftstoff-Luftgemisches zuverlässig abläuft und anforderungsgemäß reproduzierbar ist. Ferner muss die Vorkammer derart positioniert sein, dass die durch den innerhalb der Vorkammer auftretenden Zündvorgang in den Hauptbrennraum überschießenden und noch brennenden oder bereits erloschenen Zündfackeln - aber noch eine hohe thermische Energie aufweisend - sich in einer koordinierten, d.h. einer sozusagen synchronen Art und Weise, im Hauptbrennraum ausbreiten. Nur so stellt sich innerhalb des Hauptbrennraums eine gleichmäßige Ausbreitung der Flammenfront ein.

Aus der US2017/122184 A1 ist bereits ein Motorkonzept bekannt, welches eine aktive Vorkammer vorsieht. Die mit einer aktiven Vorkammer versehene Brennraumeinheit soll derart ausgeführt sein, dass eine bewusst herbeizuführende Kraftstoffzuführung in den Hauptbrennraum über denjenigen Injektor erfolgen kann, der Kraftstoff in die Vorkammer einleitet. Die Lehre der US2017/122184 A1 lässt jedoch ein konkretes Beispiel dafür vermissen, wie die Integration einer solchen aktiven Vorkammer in einen einsatzfähigen Verbrennungsmotor tatsächlich ausgeführt werden kann.

Aufgrund allgemein hin bekannter Anforderungen und bestimmter Vorteile weisen die heutigen Verbrennungsmotoren eine hohe Leistungsdichte auf und zwar sowohl hinsichtlich der auf das Gesamthubraumvolumen bezogenen als auch hinsichtlich der auf die Außenmaße eines Verbrennungsmotors bezogenen Leistungsdichte und ebenso hinsichtlich der gewichtsbezogenen Leistungsdichte. Ferner verfügen heutige Verbrennungsmotoren zumeist aufgrund bestimmter Vorteile nicht über einzelne, sondern über Einlass-/Auslassventilpaare. Quasi namensgebend ist bei fremdgezündeten Verbrennungsmotoren das Heranführen der Zündenergie erforderlich. Im Fall eines Vorkammermotors muss die äußere, d.h. primäre Zündenergie klarerweise in die Vorkammer eingebracht werden, weswegen sich bestimmte Funktionselemente der primären Zündvorrichtung innerhalb der Vorkammer bzw. im unmittelbaren Nahbereich der Vorkammer befinden müssen.

Zudem muss eine aktive Vorkammer über einen eigenen Kraftstoffzuführungspfad verfügen, was die Integration nochmals anspruchsvoller gestaltet. Sofern das Motorkonzept vorsieht, dass die Haupteinspritzung in den Hauptbrennraum innerhalb des gesamten Drehzahl-Drehmoment-Betriebsbereichs oder zumindest eines gewissen Teilbereichs davon über den sich über die Vorkammer erstreckenden Kraftstoffpfad erfolgen soll, dann beschränkt sich die Integration einer solchen entsprechend funktionsfähigen und zuverlässigen aktiven Vorkammer, durch deren Anwendung die konzeptionell erkennbaren Vorteilspotenziale tatsächlich in einem einsatzfähigen Produkt real zur Geltung kommen, nicht auf eine einfache Bauteilintegration, sondern erfordert stattdessen einen hohen Entwicklungsaufwand. Dies betrifft die Anordnung und Gestaltung der Geometriemerkmale der Vorkammer und der Überströmkanäle sowie die konkrete Umsetzung der jeweiligen Zuführung des Kraftstoffes und der primären Zündenergie in die aktive Vorkammer.

Die Verfügbarkeit entsprechender Brennraumeinheiten erlaubt die Produktion volleinsatztauglicher entsprechender Vorkammermotoren unter Beibehaltung des bereits bestehenden Rumpfmotor-Aufbaus. Es ist wünschenswert, dass der betreffende Unterschied zwischen einem Bestandsmotor und dem daraus abgeleiteten Vorkammermotor derart gering ist, dass eine vollständige Gleichheit der Schnittstellen (s.u.) zwischen einem bestehenden und einem daraus abgeleiteten erfindungsgemäßen Verbrennungsmotor besteht; zumindest sofern Letztere ihre Basisausführung aufweist.

Der Begriff Schnittstellen soll bspw. folgendes inkludieren:
- mechanische Verbindungen zur Fixierung des Verbrennungsmotorskraftmaschine und solchen an dem Basismotor angebauten Komponenten und Vorrichtungen die Fixierung und die Drehmomentübertragung betreffend
- Verbindungen zum Verbrennungsmotor für zu- und abströmende Fluide z.B. Luft, Abgas, Kraftstoff, Schmier- und Kühlmedien etc.

Auf diese Weise wird erreicht, dass
- die Entwicklungsarbeiten für einen erfindungsgemäßen Verbrennungsmotor möglichst gering sind, sofern bereits ein entsprechender Bestandsmotor existiert oder sogar bereits ein solcher industrialisiert ist.
- die Integration des resultierenden Verbrennungsmotors in ein übergeordnetes System (z.B. eine mobile Arbeitsmaschine, ein Straßenfahrzeug oder in einem stationären System) einen möglichst geringen Aufwand erfordert, sofern in einem solchen bereits ein entsprechender Bestandsmotor zur Anwendung kommt bzw. solche entsprechenden Entwicklungsfortschritte zur Erreichung dieser Zielsetzung vorliegen.

Das Erreichen der vorgenannten Zielsetzungen soll im Idealfall sogar den Umbau eines bereits in seiner bestimmungsgemäßen Nutzung befindenden Bestandsmotors erlauben.

Im Fall einer auszuführenden Motor-Neukonstruktion soll diese bezogen auf einem vergleichbaren, dem heutigen Standard entsprechenden Verbrennungsmotor das gleiche charakteristische Volumenverhältnis zwischen (i) dem Gesamthubraum aufweisen und (ii) bezugnehmend auf den Motorrumpf in etwa die gleichen oder bevorzugt geringere Außenmaße aufweisen. Demnach muss insbesondere der Abstand zwischen jeweils zwei sich auf derselben Zylinderbank befindenden und dabei unmittelbar benachbarten Brennräumen entsprechend des heutigen Standards klein bemessen sein und gleichermaßen die Leistungsdichte eines jeden Brennraumes entsprechend hoch bemessen sein. Demzufolge stehen jeweils lediglich vergleichsweise kleine Querschnittsflächen zur Verfügung über die der tatsächlich funktionstüchtige Kraftstoffzuführungspfad und der Zündpfad an die betreffende Vorkammer herangeführt werden muss.

Die vorliegende Erfindung betrifft die Konstruktion bzw. Modifikation einer Brennraumeinheit, die zusätzlich zu den heutigen Standardfunktionen, die über solche dem Stand der Technik entsprechenden Bestandteile erwirkt werden können, eine aktive Vorkammer aufweist. Die Integration der aktiven Vorkammer soll derart ausgeführt werden, dass für den Aufbau eines vollfunktionsfähigen Verbrennungsmotors auf einen bereits bestehenden Aufbau eines Verbrennungsmotors zurückgegriffen werden kann und die hierbei notwendigen Modifikationen weitestgehend auf solche Maßnahmen beschränkt werden, die unmittelbar dadurch bedingt sind, dass es sich um einen Verbrennungsmotor handelt, der aus solchen Brennraumeinheiten besteht, die jeweils über aktive Vorkammern verfügen.

Gelöst wird diese Aufgabe durch einen Verbrennungsmotor mit Vorkammerzündung gemäß den Merkmalen des Anspruchs 1. Vorteilhafte Ausführungen des Verbrennungsmotors sind Gegenstand der abhängigen Ansprüche.

Erfindungsgemäß wird vorgeschlagen, dass bei einem gattungsgemäßen Verbrennungsmotor mit Vorkammerzündung ein Vorkammer-Modul vorgesehen wird, das als zum Zylinderkopf separates Bauteil ausgeführt ist. Das Vorkammer-Modul umfasst einen solchen integralen Hohlraum, der die Vorkammer bildet. Zudem dient das Vorkammer-Modul zur funktionsgerechten Fixierung des Vorkammer-Injektors und/oder der Zündvorrichtung (21) im Zylinderkopf, d.h. das Vorkammer-Modul stellt einen Träger für die tragende Aufnahme wenigstens eines Vorkammer-Injektors und/oder einer Zündvorrichtung dar.

Der Vorkammer-Injektor ermöglicht die Zuführung der benötigten Kraftstoffmenge in die Vorkammer. Die Zündvorrichtung ragt in den Hohlraum hinein und stellt die notwendige Energie für die Zündung des im Hohlraum des Moduls befindlichen Kraftstoff-Luftgemisches zur Verfügung. Bei der Zündvorrichtung handelt es sich üblicherweise um eine Zündkerze.

Mittels des Vorkammer-Injektors kann der Kraftstoff dem im Vorkammer-Modul enthaltenen Hohlraum zugeführt werden. Das Vorkammer-Modul ist derart im Zylinderkopf einsetzbar, so dass zumindest ein Teilbereich der Modulwandung in einen zugeordneten Hauptbrennraum hineinragt bzw. wenigstens ein in der Wandung des Moduls vorgesehener Überströmkanal in den zugeordneten Hauptbrennraum mündet. Mittels des wenigstens einen Überströmkanals wird eine fluidische Verbindung zwischen Hohlraum und Hauptbrennraum sichergestellt.

Die erfindungsgemäße Lösung hat den Vorteil, dass für die Integration der aktiven Vorkammer auf einen bereits bestehenden Aufbau einer Verbrennungskraftmaschine zurückgegriffen werden kann und die notwendigen Modifikationen weitestgehend auf solche Maßnahmen beschränkt bleiben, die unmittelbar dadurch bedingt sind, dass es sich um eine Verbrennungskraftmaschine handelt, die aus solchen Brennraumeinheiten besteht, die jeweils über aktive Vorkammern verfügen. Durch den modularen Aufbau, d.h. der Verwendung eines Vorkammer-Moduls, kann ein bestehender Verbrennungsmotor oder gar Zylinderkopf in Abhängigkeit des beabsichtigten Konzeptes mit dem passenden Vorkammer-Modul bestückt werden, d.h. abhängig davon, ob die Vorkammer als reiner Zündverstärker (Konzept I) oder aber auch zur Direkteinspritzung von Kraftstoff in den Hauptbrennraum (Konzepte II, Illa, IIIb) verwendet werden soll. Die Erfindung ermöglicht also die Verwendung eines baugleichen Zylinderkopfs, unabhängig davon, ob der fertiggestellte Verbrennungsmotor mit dem Konzept I, II, Illa oder IIIb betrieben werden soll. Idealerweise unterscheiden sich lediglich die im Modul verbauten Vorkammer-Kraftstoffinjektoren für die vorgenannten Konzepte, derweil der Zylinderkopf und das Vorkammer-Modul unabhängig davon sind, ob der Verbrennungsmotor gemäß Konzept I oder II betrieben werden soll.

Gerade bei einer Betriebsart nach dem Konzept II oder auch IIIa, IIIb werden Kraftstoffinjektoren benötigt, die ein ausreichend großen Einspritzvolumen pro Arbeitszyklus bereitstellen können. In Relation des für seinen Einbau ihm zur Verfügung stehenden Einbauquerschnitts steht einem derartigen Kraftstoff-Injektor lediglich ein diesbezüglich vergleichsweise geringes Abmaß zur Verfügung, insbesondere bei solchen eine hohe Leistungsdichte aufweisenden Verbrennungsmotoren, so dass die aus dem Stand der Technik bekannten Konzepte für deren Anordnung nicht geeignet sind. Das Volumen pro Brennraum des Verbrennungsmotors kann zwischen 2 Litern und 5 Litern liegen.

Für das erfindungsgemäße Vorkammer-Modul wird weiter vorgeschlagen, dass die Längsachse bzw. die Fortführung der Längsachse wenigstens einer der in das Modul eingesetzten Komponenten Vorkammer-Injektor oder Zündvorrichtung schräg zur Längsachse des Hauptbrennraums bzw. deren Fortführung verläuft. Im Nachfolgenden wird der Einfachheit halber immer nur von Längsachsen gesprochen, wobei damit entweder die Längsachse des jeweiligen Bauteils gemeint ist oder aber deren gedachten Fortführung der Achse.

Durch die zur Längsachse des Hauptbrennraums schräge Zuführung wenigstens einer dieser Komponenten ergibt sich mehr Bauraum für die Anordnung der beiden Komponenten Vorkammer-Injektor und Zündvorrichtung im Bereich oberhalb des Hauptbrennraums innerhalb des Zylinderkopfs. Insgesamt wird dadurch eine Verwendung von Kraftstoffinjektoren für die Vorkammer mit einem höheren Einspritzvolumen ermöglicht, d.h. mit der Fähigkeit einen diesbezüglich höheren Massenstrom bereitstellen zu können, um die Anforderungen an die vorgestellten Konzepte II, Illa, IIIb erfüllen zu können.

Bspw. war im Stand der Technik vorgesehen, Vorkammer-Injektor und Zündvorrichtung mit nahezu parallelen Längsachsen anzuordnen, die annähernd parallel zur Längsachse des Hauptbrennraums verlaufen. Die dadurch bedingte nebeneinanderliegende Anordnung beider Komponenten bietet in der Praxis jedoch keinen ausreichenden Bauraum dafür, um großvolumige Injektoren einsetzen zu können, die jedoch für das tatsächliche Umsetzen an einem einsatztauglichen Verbrennungsmotor zwangsweise erforderlich sind.

Gemäß bevorzugter Ausführung schneiden sich die Längsachse der schräg angeordneten Komponente aus Vorkammer-Injektor und/oder Zündvorrichtung und die Längsachse des Hauptbrennraums. Die beiden Längsachsen bilden somit einen Winkel, der im Bereich zwischen 10° und 60°, bevorzugt im Bereich zwischen 20° und 50°, besonders bevorzugt zwischen 25° und 40° liegt. Die andere der Komponenten Vorkammer-Injektor und Zündvorrichtung ist derart montiert, so dass deren Längsachse parallel der Längsachse des Hauptbrennraums ausgerichtet ist und idealerweise deckungsgleich zu dieser verläuft.

In der bevorzugten Ausführung ist die die Längsachse des Vorkammer-Injektors parallel zur Längsachse des Hauptbrennraums ausgerichtet bzw. liegt mit dieser deckungsgleich. Es ist folglich die Zündvorrichtung, die schräg zur Längsachse des Hauptbrennraums zugeführt ist. Dadurch kann der verfügbare Bauraum oberhalb des Hauptbrennraums im Zylinderkopf optimal für die Installation des Vorkammer-Injektors ausgenutzt werden.

Bevorzugt ist es auch, wenn die Längsachse des die Vorkammer bildenden Hohlraums parallel oder deckungsgleich bzw. fluchtend zur Längsachse der Zündvorrichtung bzw. einer die Zündvorrichtung aufnehmenden Bohrung innerhalb des Vorkammer-Moduls ist. Insbesondere schließt sich jener Hohlraum unmittelbar an die Zündvorrichtung an. Bei Anwendung auf die vorstehend beschriebene vorteilhafte Ausführung mit schräger Zuführung der Zündvorrichtung verläuft demnach auch die Längsachse des die Vorkammer bildenden Hohlraums schräg zur Längsachse des Hauptbrennraums.

Weiterhin bevorzugt ist es, wenn die Längsachse des Vorkammer-Injektors und die Längsachse der Zündvorrichtung bzw. deren Aufnahmebohrung eine Ebene definieren, die parallel zu einer durch die Bewegungsachsen der Brennraum-Einlassventilstößel aufgespannten Ebene und/oder durch die Bewegungsachsen der Brennraum-Auslassventilstößel aufgespannten Ebene liegt. Besonders bevorzugt liegt die durch die Längsachsen des Vorkammer-Injektors und der Zündvorrichtung aufgespannte Ebene zwischen den vorgenannten Ebenen der Bewegungsachsen der Ventilstößel.

Der Zylinderkopf und das Vorkammer-Modul können derart gestaltet sein, sodass eine Bestückung des Vorkammer-Moduls mit dem Vorkammer-Injektor und/oder der Zündvorrichtung noch vor dem Einbau des Moduls in den Zylinderkopf möglich ist. Idealerweise kann das Vorkammer-Modul als baulich vervollständigte Einheit im Ganzen in den Zylinderkopf eingesetzt werden. Dies ermöglicht einen gesonderten Funktionstest des Vorkammer-Moduls und der verbauten Komponenten noch vor ihrem Einbau in den Zylinderkopf.

Wie bereits vorstehend beschrieben, dient das Vorkammer-Modul als Träger für den Vorkammer-Injektor und die Zündvorrichtung. Dies schließt jedoch nicht aus, dass diese beiden Komponenten gleichermaßen am Zylinderkopf fixiert sind. Für die tragende Aufnahme des Vorkammer-Injektors und Zündvorrichtung sind vorzugsweise Aufnahmebohrungen im Vorkammer-Modul vorgesehen, in die jene Komponenten eingeführt werden können.

In einer Ausgestaltung der Erfindung ragt die Düse des Vorkammer-Injektors nicht unmittelbar in das Volumen des die Vorkammer bildenden Hohlraums, sondern es ist stattdessen ein Verbindungskanal innerhalb des Modulmaterials integriert, der die Düse des Vorkammer-Injektors mit jenem Hohlraum fluidisch verbindet. Im einfachsten Fall kann der Verbindungskanal über die gesamte Länge zylindrisch ausgeführt sein. Vorstellbar ist jedoch auch eine Ausführung mit sich in Längsrichtung ändernder Profilform. Idealerweise weist der Verbindungskanal wenigstens einen konisch ausgestalteten Abschnitt auf, insbesondere reduziert sich diesbezüglich der Kanaldurchmesser in Richtung des Hohlraums. Eine solche Ausführung des Verbindungskanals kann das Auftreten des unerwünschten Effekts des Backfirings von der Vorkammer in Richtung des Vorkammer-Injektors effektiv verhindern bzw. minimieren.

Wünschenswert ist es ebenso, wenn die Kanalform derart ausgestaltet ist oder mit passenden Leitelementen versehen ist, so dass Verwirbelung des in den Hohlraum eingespritzten Kraftstoffes aktiv erzeugt werden. Verwirbelungen im Einlassbereich der Vorkammer verbessern die Vermischung des eingespritzten Kraftstoffes mit dem in der Vorkammer vorgehaltenen Luftgemisch.

Der Verbindungskanal kann einen geradlinigen Verlauf haben, vorstellbar ist jedoch auch ein abschnittsweise gekrümmter bzw. gewinkelter Verlauf, wobei sich die Bahnkurve, über die sich die Krümmung erstreckt, vorzugsweise in einer Ebene befinden kann. Auch dies kann eine bessere Homogenität des Kraftstoffluftgemisches innerhalb der Vorkammer begünstigen. Denkbar ist ebenfalls ein Kanalverlauf, der zumindest innerhalb eines Abschnitts eine Helixform aufweist. Durch die spiral- bzw. wendelartige Kanalführung wird für den in den Hohlraum eintretenden Kraftstoff eine Wirbelbildung innerhalb des Hohlraums erzeugt, die sehr vorteilhaft für die Kraftstoff-Luftgemischbildung innerhalb der Vorkammer sein kann. Ausreichend hierfür kann ein Viertel oder eine Hälfte einer vollständigen Wendelform sein. Eine entsprechend gute Gemischbildung ist insbesondere dann extrem erstrebenswert, wenn die Betriebsstrategie des Motorbetriebs vorsieht, dass innerhalb der Vorkammer zu einem jeweiligen Zündzeitpunkt ein solches Verbrennungsluftverhältnis vorliegt, welches sich vergleichsweise nah an der Zündfähigkeitsgrenze befinden soll, d.h. entweder bei einem hohen Kraftstoffüberschuss oder einem hohen Luftüberschuss. Insbesondere ist eine dieser vorgenannten Motorbetriebsstrategien und damit eine entsprechende Gestaltung des Verbindungskanals für einen solchen Verbrennungsmotor extrem vorteilhaft, der in einem ausgewogenen Verhältnis in Bezug auf seinen Hauptbrennraum mit einem sehr hohen Luftüberschuss betrieben wird, wohingegen in dessen Vorkammer zum Zündzeitpunkt ein sehr hoher Kraftstoffüberschuss besteht. Für einen entsprechend betriebenen Verbrennungsmotor schießt zu einem jeweils entsprechenden Zeitkorridor aufgrund der Vorkammerzündung in Relation zu der Vorkammerbeladung eine vergleichsweise hohe Menge an bereits stark erhitztem Kraftstoff über die Überströmkanäle in den Hauptbrennraum ein, die darin aufgrund des dortigen hohen Luftüberschusses zuverlässig verbrennt. Dies hat den grossen Vorteil, dass ein wesentlich höherer Anteil der thermischen Energie des aus der Vorkammerbeladung stammenden Kraftstoffes erst im Hauptbrennraum freigesetzt wird, um darin das stets zuverlässige Auslösen der Verbrennung des darin enthaltenen mageren Kraftstoff-Luftgemisches, d.h. der originären Kraftstoff-Luft-Beladung innerhalb des Hauptbrennraums zu erwirken. Die Vorteile eines sogenannten mageren Motorbetriebs voraussetzlich, dass die Kraftstoff-Luftgemischbildung entsprechend zuverlässig ist und dabei dauerhaft einhaltbar aufrechterhalten wird, sind dem Fachmann bekannt.

Das Vorkammer-Modul kann einteilig gefertigt sein. Gemäß einer bevorzugten Ausführungsform kann das Vorkammer-Modul jedoch auch mehrteilig gefertigt sein. So unterliegen spezifische Teilbereiche des Vorkammer-Moduls unterschiedlichen Anforderungen an Maßeinhaltung und Oberflächengüte. Vor diesem Hintergrund ist es zweckmäßig, solche Teilbereiche, die höheren Anforderungen an Maßeinhaltung und Oberflächengüte unterliegen, als ein erstes separates Bauteil zu fertigen. Diese ersten Bauteile sind mit einem geeignetem Fertigungsverfahren herzustellen, das diesen Anforderungen genüge tut. Andere Teilbereiche des Moduls, die einen höheren Toleranzgrad für Maßeinhaltung und Oberflächengüte akzeptieren, können stattdessen als wenigstens ein zweites Bauteil separat gefertigt werden. Mit anderen Worten, Teilbereiche mit ähnlichen Anforderungen an Maßeinhaltung und Oberflächengüte sollen möglichst in gemeinsamen Einzelbauteilen des Moduls konzentriert werden.

Als geeignetes Fertigungsverfahren für das wenigstens eine erste Bauteil mit hoher Anforderung an Maßeinhaltung und Oberflächengüte wird ein 3D-Druckverfahren bzw. ein additives Fertigungsverfahren vorgeschlagen. Das wenigstens eine zweite Bauteil mit höherer Fertigungstoleranz kann bspw. mittels konventioneller subtraktiver Verfahren produziert werden.

Ein erstes Bauteil, an das höhere Präzisionsanforderungen hinsichtlich der Maßeinhaltung und Oberflächengüte gestellt sind, umfasst bspw. diejenigen Teilbereiche, in den der die Vorkammer bildende Hohlraum inklusive der oder die Überströmkanäle enthalten sind. Ferner ist es auch vorteilhaft, wenn das erste Bauteil den Zuleitungskanal vom Vorkammer-Injektor zum Hohlraum umfasst. Das zweite Bauteil mit höherer Fertigungstoleranz enthält die Teilbereiche, denen eine rein tragende Funktion zukommt, wie bspw. die Aufnahme des Vorkammer-Injektors und/oder der Zündvorrichtung und/oder etwaige Befestigungsmittel zur Fixierung des Vorkammer-Moduls im Zylinderkopf.

Von Vorteil ist es auch, wenn solche Bereiche des Vorkammer-Moduls, die einem vergleichsweise hohen Verschleiß unterliegen, wie bspw. der Hohlraum und die Überströmkanäle, vollständig in einem gemeinsamen Bauteil der mehrteiligen Vorkammer-Moduls integriert sind. Dadurch besteht die Möglichkeit, derartige Verschleißteile gezielt ersetzen zu können und einen vollständigen Austausch des Vorkammer-Moduls zu vermeiden.

Eine besonders vorteilhafte Ausführung der Erfindung sieht vor, dass die Zündvorrichtung von außerhalb des Motorblocks, respektive des Zylinderkopfes und/oder Zylinderkopfdeckels, zugänglich und de- bzw. montierbar ist. Da es sich bei der Zündvorrichtung/Zündkerze um ein Verschleißteil handelt, ist ein einfacher Austausch ohne eine bestehende Notwendigkeit einer Demontage des Zylinderkopfdeckels wünschenswert. Eine besonders gute Zugänglichkeit ist gegeben, wenn die Zündvorrichtung diejenige Komponente ist, deren Längsachse schräg zur Längsachse des Hauptbrennraums ausgerichtet ist. Dadurch befindet sich das aus dem Zylinderkopf austretende Ende der Zündvorrichtung nicht im Nahbereich der Ventilstößel. Möglicherweise umfasst der Verbrennungsmotor pro Brennraum ein Paar von Einlass- und Auslassventilen. Ein grosser Bereich oberhalb eines vollständig bestückten Zylinderkopfes wird durch solche zum Ventiltrieb zugehörigen Bauteile eingenommen. Durch das schräge Hinausführen der Zündvorrichtung aus dem Zylinderkopf, insbesondere in Richtung des Lufteinlasses, ist das freiliegende Ende der Zündvorrichtung damit frei zugänglich.

Wie bereits vorstehend erwähnt wurde, kann die Längsachse des die Vorkammer bildenden Hohlraums die Längsachse des Hauptbrennraums schneiden. Da eine symmetrische Zuführung des Kraftstoffluftgemisches bzw. der Zündfackeln aus der Vorkammer in den Hauptbrennraum wünschenswert ist, muss der Anordnung der Überströmkanäle besondere Bedeutung geschenkt werden. Bevorzugt weisen zumindest zwei oder mehrere Überströmkanäle unterschiedliche Kanallängen auf, damit sich bei einer Kraftstoffeinspritzung über die Vorkammer in den Hauptbrennraum im Mündungsbereich innerhalb des Hauptbrennraums ein symmetrisches Spraybild, insbesondere durch eine aus der Perspektive des Hauptbrennraum symmetrische Anordnung der Austrittsöffnung im entsprechenden Wandungsbereich des Vorkammer-Moduls ergibt.

Insbesondere ist es sinnvoll, wenn die Austrittpunkte der Überströmkanäle auf einer gemeinsamen Ringgruppe am in den Hauptbrennraum hineinragenden Kuppenbereich des Vorkammer-Moduls angeordnet sind. Insbesondere sind diese rotationssymmetrisch zu einer zur Längsachse des Hauptbrennraums verlaufenden Achse angeordnet. Dadurch wird das Ausbilden eines symmetrischen Spraybilds des in den Hauptbrennraum eintretenden Gemisches begünstigt, obwohl die Längsachse des die Vorkammer bildenden Hohlraums nicht parallel geschweige denn deckungsgleich zur Längsachse des Hauptbrennraums verläuft. Innerhalb des die Vorkammer bildenden Hohlraums ist die Anordnung der Öffnungseintritte der Überströmkanäle in den Hauptbrennraum vorzugsweise nicht rotationsymmetrisch zur Längsachse der Vorkammer.

Auch kann vorgesehen sein, dass die Wände des Vorkammer-Moduls in seinem Kuppenbereich, d.h. im Nahbereich der Überströmkanäle, derart ausgeformt sind, dass solche Überströmkanäle, deren Austrittspunkte sich auf einer gemeinsamen Ringgruppe befinden, allesamt die gleiche Kanallänge aufweisen.

Idealerweise durchdringt zumindest ein Teil der Überströmkanäle die Vorkammerwand in den Hauptbrennraum nicht senkrecht (d.h. in Bezug auf die jeweils lokale Tangentialebene), sondern schräg, d.h. die Kanäle durchdringen die Vorkammerwand bezogen auf den Kuppen-Umfang in einer gewissen Schräglage, wodurch sowohl bei dem sich über die Überströmkanäle erstreckenden Kraftstofftransport in den Hauptbrennraum und gleichermaßen in entgegengesetzter Richtung für den Transport von Kraftstoff-Luftgemisch in die Vorkammer eine entsprechende Verwirbelung auftritt, damit sich während der jeweils entsprechenden Betriebsphasen eine bessere Kraftstoff-Luftgemischbildung im Hauptbrennraum bzw. in der Vorkammer ergibt.

Zwischen Vorkammer-Modul, insbesondere im Bereich des wenigstens einen Überströmkanals, und der zugeordneten Auflagefläche am Zylinderkopf, insbesondere im Bereich der Flammplatte, kann ein das Vorkammer-Modul im Bereich des Hohlraums umgebender Sitzring vorgesehen sein, der vorzugsweise als Flanschring ausgestaltet ist.

Ferner ist es zweckmäßig, wenn der die Vorkammer bildende Hohlraum keine rotationssymmetrische Geometrie aufweist, sondern stattdessen ein oder mehrere volumenvergrößernde partielle Aufweitungen aufweist. Die Aufweitung kann raupenförmig ausgeführt sein. Entsprechende partielle Aufweitungen sind bevorzugt im bzw. um den Mündungsbereich des Vorkammer-Injektors bzw. des betreffenden Verbindungskanals vorhanden. Mit Hilfe der partiellen Aufweitung kann eine bessere Vermischung des eintretenden Kraftstoffes mit der sich bereits im Hohlraum befindlichen Luft erzielt werden, was jeweils innerhalb derjenigen Betriebsphasen zur vorteilhaften Geltung kommt, in denen diejenige Kraftstoffbeladung der Vorkammer erfolgt, die zur Ausbildung der Zündfackeln Verwendung findet. Die partielle Aufweitung ist vorzugsweise derart ausgeführt, dass genau eine gedankliche derart positionierte Ebene existiert, über die die Vorkammer bzw. der Hohlraum gedanklich in zwei Bereiche unterteilt werden kann, welche die gleiche Geometrie aufweisen.

Der Vorkammer-Injektor wird bevorzugt in eine Ausnehmung des Vorkammer-Moduls eingebracht und am Modul mittels wenigstens einer Haltepratze fixiert. Die Haltepratze wird mit der Oberseite des Vorkammer-Moduls verschraubt.

Die Zündvorrichtung, insbesondere Zündkerze, kann in einer passenden Bohrung des Vorkammer-Moduls aufgenommen sein und mit Hilfe einer die Zündkerze umgebenden Hülse gesichert sein. Die Hülse kann dabei sowohl am Vorkammer-Modul als auch am Zylinderkopf und/oder Zylinderkopfdeckel befestigt sein. Die Zündkerze kann mitsamt der Hülse aus dem Zylinderkopfdeckel herausragen, so dass ein Austausch der Zündkerze ohne Demontage des Zylinderkopfdeckels möglich ist.

Aufgrund der auftretenden Temperaturen im Bereich der Vorkammer ist eine Kühlung des Vorkammer-Moduls notwendig und sinnvoll. Etwaige, im Zylinderkopf verlaufende Kühlkanäle sind vorzugsweise an die Struktur des Vorkammer-Moduls angepasst und umströmen das eingesetzte Modul. Idealerweise wird die Wand des Vorkammer-Moduls unmittelbar vom Kühlmedium umströmt. Die Wandung des Vorkammer-Moduls kann mit ein oder mehreren Rippen zum Zweck der Oberflächenvergrößerung und Erhöhung der erzielbaren Kühlwirkung versehen sein.

Durch eine spezifische Wandungskontur lassen sich zudem gezielt Verwirbelungen des vorbeiströmenden Kühlmediums im Bereich um den Hohlraum erzeugen, wodurch die Kühlwirkung weiter optimiert werden kann.

Das Vorkammer-Modul kann bevorzugt mit wenigstens einem Sensorraum zur Aufnahme eines Sensors versehen sein. Ein solcher Sensorraum ragt vorzugsweise in die Vorkammer hinein bzw. liegt nahe im Bereich der Holraumwandung, um charakteristische Messgrößen für die Vorkammer erfassen zu können. Vorstellbar ist bspw. eine Temperatur- und/oder Druckmessung bzw. die Messung des Luft-/Kraftstoffverhältnisses in der Vorkammer, d.h. des Lambda-Wertes.

Der beschriebene Verbrennungsmotor ist vorzugsweise geeignet, in einer Betriebsart betrieben zu werden, gemäß dieser die aktive Vorkammer ausschließlich als Zündverstärker für den ihr funktional zugeordneten Hauptbrennraum eingesetzt wird. Alternativ oder zusätzlich kann der Verbrennungsmotor bevorzugt auch derart betrieben werden, dass eine Direkteinspritzung von Kraftstoff in den Hauptbrennraum über die aktive Vorkammer erfolgt, wobei bspw. die im Vollastbetrieb benötigte Kraftstoffmenge über die Vorkammer in den Hauptbrennraum zuführbar ist oder zumindest die für einen Teillastbetrieb erforderlich Menge. Denkbar ist es auch, dass der Verbrennungsmotor wenigstens einen zur Vorkammer alternativen Kraftstoffzuführungspfad in die Hauptbrennraum aufweist, bspw. eine Saugrohreinspritzung. In diesem Fall kann der Verbrennungsmotor geeignet sein, den Kraftstoff selektiv über die Vorkammer und/oder den alternativen Kraftstoffpfad in den Hauptbrennraum zuzuführen, bspw. in Abhängigkeit der aktuellen Motorlast.

Der Verbrennungsmotor kann ein Wasserstoffmotor sein. Der Verbrennungsmotor kann zudem zusätzlich eine Saugrohreinspritzung aufweisen, die in einer der möglichen Ausführungsformen der einzige Kraftstoffzuführungspfad für den Hauptbrennraum ist, derweil die Vorkammer lediglich als Zündverstärker fungiert oder die in einer anderen möglichen Ausführungsform als einer der möglichen Kraftstoffzuführungspfade in den Hauptbrennraum dient. Bevorzugt ist es, wenn der betreffende Kraftstoffaustritt aus dem für die Saugrohreinspritzung vorhandenen Injektor aufgrund seiner Anordnung und Ausführung in demjenigen Abschnitt des Saugkanals erfolgt, der bereits im Zylinderkopf eingearbeitet ist. Die Befestigung des Injektors für die Saugrohreinspritzung kann dann mittelbar oder bevorzugt unmittelbar am Zylinderkopf erfolgen.

Zwischen dem die Vorkammer bildenden Hohlraum des Vorkammer-Moduls und dem Hauptbrennraum kann sich in einer optionalen Ausgestaltung ein Ventil befinden. Idealerweise erfolgt die Ventilintegration bzw. Ventilkonstruktion jedoch derart, dass unabhängig von der Position des Ventilverschlusselements mindestens eine geöffnete Fluidverbindung zwischen der Vorkammer und dem Hauptbrennraum bestehen bleibt. In einer anderen Position des Ventilverschlusselements besteht dann mindestens eine weitere Fluidverbindung zwischen dem die Vorkammer bildenden Hohlraum und dem Hauptbrennraum.

Weitere Vorteile und Eigenschaften der Erfindung sollen nachfolgend anhand eines in den Figuren dargestellten Ausführungsbeispiels näher erläutert werden. Es zeigen:
- Figur 1:: einen Querschnitt durch den Zylinderkopf einer ersten Ausführung des erfindungsgemäßen Verbrennungsmotors mit eingesetztem Vorkammer-Modul,
- Figur 2:: eine Detaildarstellung des Zylinderkopfes gemäß Figur 1 im Bereich des die Vorkammer bildenden Hohlraums,
- Figuren: 3a, 3b: perspektivische Darstellungen des unbestückten Zylinderkopfes gemäß der ersten Ausführung,
- Figur 4:: eine Draufsicht auf den unbestückten Zylinderkopf gemäß der ersten Ausführung,
- Figur 5:: perspektivische Darstellung des vollständig bestückten Zylinderkopfes gemäß der ersten Ausführung,
- Figur 6:: eine Explosionsdarstellung des Zylinderkopfes nebst Vorkammer-Modul gemäß der ersten Ausführung,
- Figuren 7a, 7b:: unterschiedliche Varianten des Vorkammer-Moduls,
- Figur 7c:: Schnittdarstellung des Vorkammer-Moduls,
- Figuren 8a - 8c:: Detaildarstellungen des Vorkammer-Moduls,
- Figur 9:: eine schematische Ansicht auf die Flammplatte des Zylinderkopfes aus einer Perspektive vom Brennraum gesehen,
- Figuren 10a, 10b:: eine weitere alternative Ausführung des Vorkammer-Moduls,
- Figuren 11a, 11b:: Schnittdarstellung durch den erfindungsgemäßen Zylinderkopf der Verbrennungsmaschine gemäß der ersten Ausführung mit zwei unterschiedlichen Varianten eines montierten Zylinderkopfdeckels und
- Figur 12:: eine weitere alternative Ausführung des Vorkammer-Moduls.

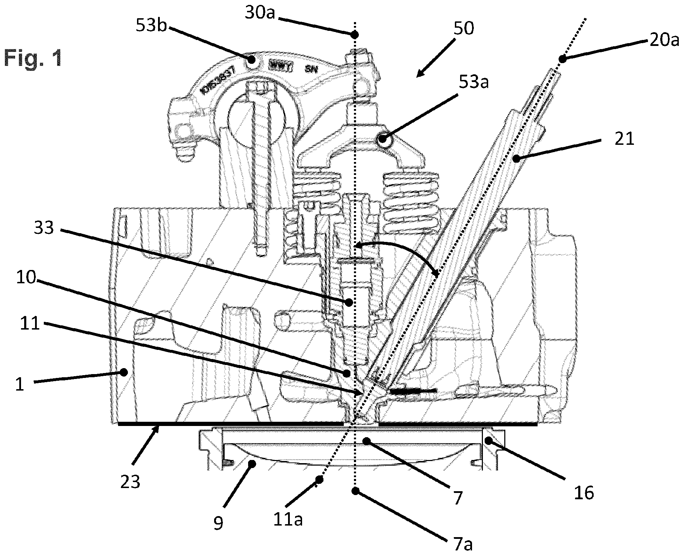

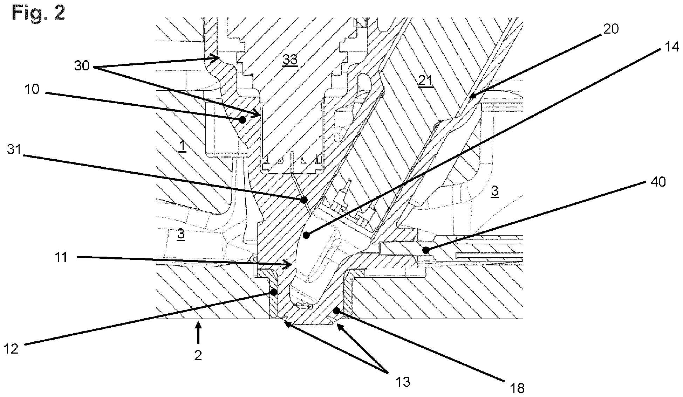

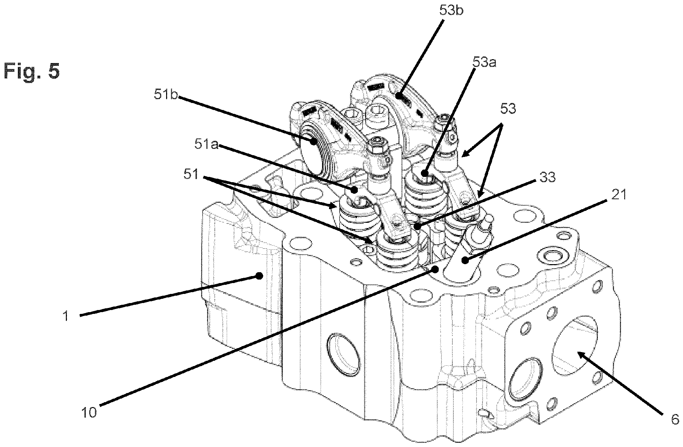

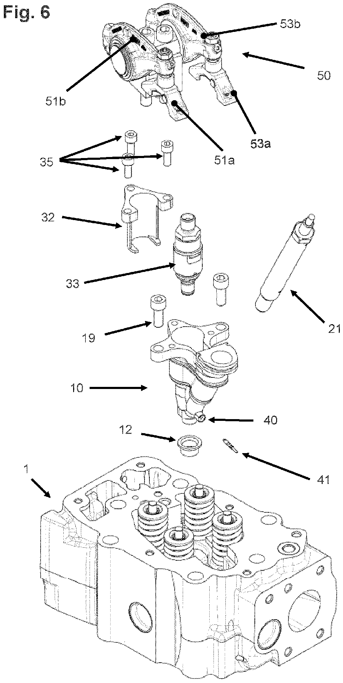

Figur 1 zeigt einen Querschnitt durch den Zylinderkopf 1 eines erfindungsgemäßen Verbrennungsmotors, der vorzugsweise als Gasmotor, insbesondere als Wasserstoffmotor ausgestaltet ist. Die Figuren 2-5 zeigen alternative Perspektiven bzw. Ausschnitte dieser Ausführung. Das Bezugszeichen 2 kennzeichnet den Bereich der Flammplatte 2 des Zylinderkopfes 1. Auf der Oberseite des Zylinderkopfes 1 sind oberhalb der jeweiligen Hauptbrennräume die Ventiltriebe 50 für die Ein- und Auslassventile verbaut. Pro Brennraum existiert bei dem hier gezeigten Verbrennungsmotor ein Paar von Ein- und Auslassventilen 53, 51, die jeweils über eine gemeinsame Ventilbrücke 51a, 53a und den gemeinsamen Kipphebel 51b, 53b betätigbar sind (siehe Figur 5, 6). Unterhalb des Ventiltriebs 50 ist das Vorkammer-Modul 10 in eine dafür vorgesehene Ausnehmung 4 des Zylinderkopfes 1 eingesetzt.

Das Vorkammer-Modul 10 dient als Träger für eine Zündkerze 21 sowie einen Vorkammer-Injektor 33. Die Zündkerze 21 ist dazu in eine entsprechende Aufnahmebohrung 20 des Vorkammer-Moduls 10 eingesetzt, die gestufte Aufnahmebohrung 30 dient zum Einsetzen des Vorkammer-Injektors 33. Die Längsachse 30a der Aufnahmebohrung 30 bzw. des eingesetzten Vorkammer-Injektors 33 verläuft fluchtend bzw. deckungsgleich mit der Längs- bzw. Rotationsachse des darunterliegenden Hauptbrennraums 7. Den Kolben 9 und die Laufbuchse 16 betreffend zeigt der gewählte Längsschnitt lediglich den Nahbereich der Brennraummulde auf. Mit dem Bezugszeichen 23 ist noch die Zylinderkopfdichtung angedeutet. Die Längsachse 20a der Aufnahmebohrung 20 bzw. der eingesetzten Zündkerze 21 verläuft schräg zur Achse 30a bzw. zur Brennraumachse 7a. Der das Brennraumvolumen der Vorkammer bildende Hohlraum ist mit dem Bezugszeichen 11 gekennzeichnet. Erkennbar ist, dass die Längsachse 11a des Hohlraums 11, sprich der Vorkammer auf der Längsachse 20a der Zündvorrichtung liegt und damit ebenfalls schräg zur Längsachse 7a des Hauptbrennraums 7 sowie der Längsachse 30a des Vorkammer-Injektors 33 orientiert ist.

Durch diese Maßnahme kann der verfügbare Bauraum unterhalb des Ventiltriebs 50 nahezu vollständig für die Installation eines Vorkammer-Injektors 33 ausgenutzt werden, wodurch dieser deutlich größer dimensionierbar ist und die mittels des Vorkammer-Injektors 33 pro Zyklus - resp. innerhalb eines sich darin zur Verfügung stehenden Zeitkorridors - zuführbare maximale Kraftstoffmenge erheblich ansteigt. Die Vorgeschlagene Bauart macht daher ein Motorbetriebskonzept gemäß der eingangs erwähnten Varianten I, II, IIIa und IIb möglich.

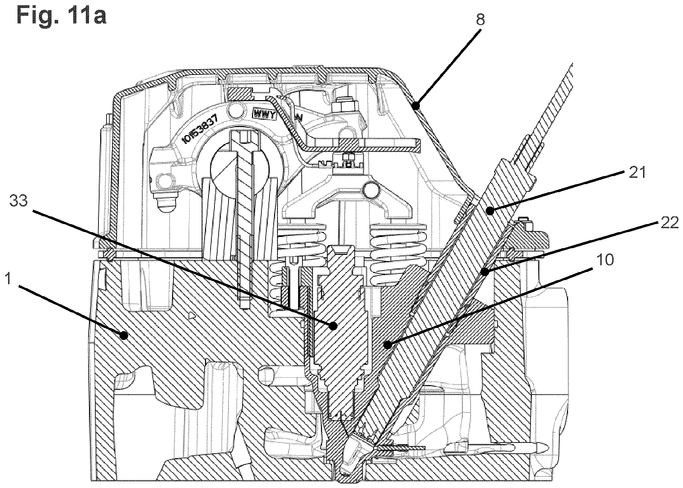

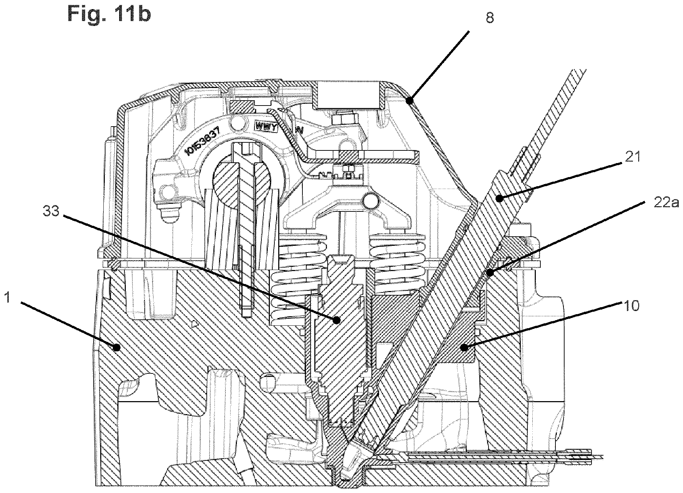

Ein weiterer Vorteil dieser Bauart besteht darin, dass das Ende der Zündkerze 21 durch die schräge Lage nicht im Bereich des Ventiltriebs 50 aus dem Zylinderkopf austritt, sondern dazu in Richtung des Lufteinlasses versetzt. Damit ist das freiliegende Ende der Zündkerze 21 frei zugänglich. Idealerweise ist der Neigungswinkel der Längsachse 20a so gewählt, dass die Zündkerze 21 nicht unterhalb des aufgesetzten Zylinderkopfdeckels 8 aus dem Zylinderkopf 1 heraussteht, sondern ebenfalls seitlich in Richtung des Lufteinlasses versetzt herausragt (siehe Figuren 11a, 11b), so dass die Zündkerze 21 ohne Demontage des Zylinderkopfdeckels 8 oder sonstiger Komponenten des Zylinderkopfes 1 zugänglich und komfortabel ausgetauscht werden kann. Zur Stabilisierung und Fixierung der Zündkerze 21 ist hierfür eine die Aufnahmebohrung 20 verlängernde Führungshülse 22 in dieselbe eingesetzt, die einerseits am Vorkammer-Modul 10 fixiert und andererseits am Rand des Zylinderkopfdeckels 8 befestigt ist (siehe Figur 11a). Alternativ könnte die Führungshülse 22a auch vollständig durch den Zylinderkopfdeckel 8 ausgebildet sein (Figur 11b), wobei in diesem Fall eine Fertigung des Zylinderkopfdeckels 8 per 3D-Druck oder eines anderen additiven Herstellungsverfahrens sinnvoll ist.

Eine vergrößerte Detaildarstellung des Vorkammer-Moduls 10, insbesondere des Bereichs um den Hohlraum 11 ist in der Figur 2 gezeigt. Diese hier vergrößert dargestellte Ausführung des Vorkammer-Moduls 10 zeigt einen die Vorkammer ausbildenden Hohlraum 11, der nicht rotationssymmetrisch ist, sondern stattdessen eine über seinen Umfang variierende Geometrie aufweist. Insbesondere ist hier im Bereich unterhalb der Kraftstoffzuführungsöffnung des Kanals 31 eine partielle, den Durchmesser vergrößernde Aufweitung 14 des Hohlraums 11 vorgesehen, wodurch als Folge davon im Allgemeinen eine Aufweitung der entsprechenden lokalen Aussenabmasse einhergeht. Durch diese Aufweitung können gezielt Verwirbelung des eintretenden Kraftstoffes erzeugt und somit eine bessere Vermischung mit dem innerhalb der Vorkammer befindlichen Luftgemisch erzielt werden. Der Vorkammer-Injektor 33 ist über den im Modul integrierten Verbindungskanal 31 zur Kraftstoffzuführung in die Vorkammer fluidisch mit dem Hohlraum 11 verbunden. In der hier gezeigten Ausführungsform zeigt der Versorgungskanal 31 einen geradlinigen Verlauf, wobei dieser im einfachsten Fall zylindrisch ausgestaltet sein kann. Bevorzugt ist jedoch eine zumindest abschnittsweise konische Kanalgestaltung, wobei sich vorzugsweise der Kanaldurchmesser in Richtung des Hohlraums 11 reduziert. Durch diese Maßnahme kann ein unerwünschtes Backfiring von der Vorkammer in Richtung des Vorkammer-Injektors 33 reduziert oder vermieden werden.

Die untere Kuppe 18 des Vorkammer-Moduls 10 ragt aus der Flammplatte 2 des Zylinderkopfes 1 hinaus und endet im Hauptbrennraum 7. Die Kuppe 18 umfasst eine Vielzahl von Überströmkanälen 13, die die notwendige fluidische Verbindung zwischen der Vorkammer und dem Hauptbrennraum 7 bilden. Diese Überströmkanäle 13 ermöglichen sowohl den Kraftstoffdurchfluss von der Vorkammer in den Hauptbrennraum 7 gleichsam einer Direkteinspritzung und ebenso ein Überschießen der Zündfackeln von der Vorkammer in den Hauptbrennraum 7. Auch dienen diese Überströmkanäle 13 als Luftzuführung in die Vorkammer. Um den äußeren Umfang der Kuppe 18 des Vorkammer-Moduls 10 verläuft ein Flanschring 12, um den Hauptbrennraum 7 im Eintrittsbereich der Kuppe 18 des Vorkammer-Moduls 10 abzudichten.

Ferner sind der Querschnittsdarstellung Teilabschnitte der im Zylinderkopf 1 verlaufenden Kühlkanäle 3 zu entnehmen. Der Verlauf der Kühlkanäle 3 wurde dahingehend angepasst, so dass das eingesetzte Vorkammer-Modul 10 insbesondere in demjenigen Wandbereich, der den die Vorkammer entsprechenden Hohlraum 11 unmittelbar umschliesst, durch das zirkulierende Kühlmedium unmittelbar umströmt wird.

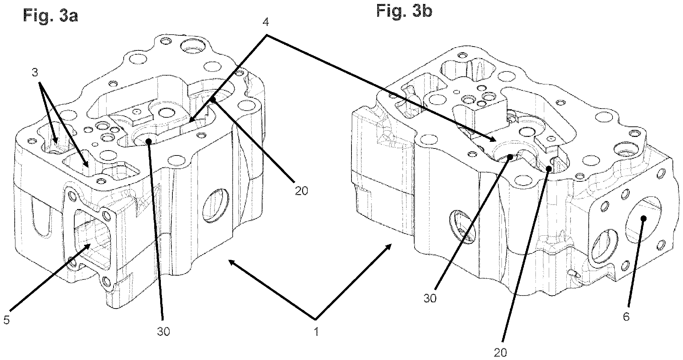

Die Figuren 3a, 3b zeigen perspektivische Ansichten des unbestückten Zylinderkopfes 1, mit der entsprechenden Ausnehmung 4 für den Einsatz des Vorkammer-Moduls 10. Die Ausnehmung 4 dient ebenfalls zur Installation der Ventilstößel für die Einlass- und Auslassventile 53, 51. Erkennbar ist in dieser Darstellung, dass die Aufnahmebohrung 20 für die Zündkerze 21 im Nahbereich des Lufteinlass 6 schräg in den Zylinderkopf 1 hineinragt. Auf der zum Lufteinlass 6 gegenüberliegenden Seite des Zylinderkopfes 1 befindet sich die Öffnung des Abgasauslasses 5.

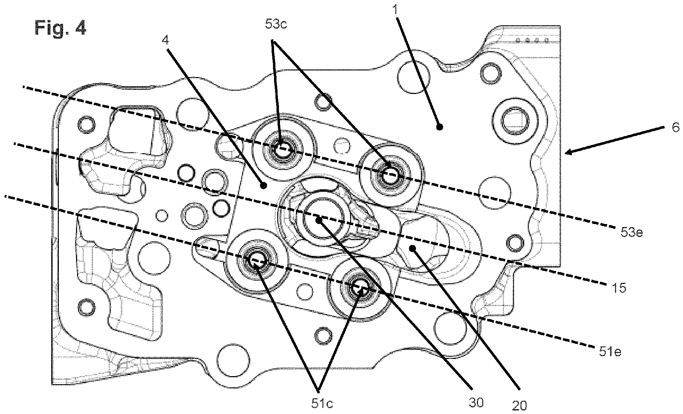

Die Figur 4 zeigt eine Draufsicht auf den Zylinderkopf 1 und soll die Lage des Vorkammer-Moduls 10 relativ zum Ventiltrieb 50 verdeutlichen. Ersichtlich sind die Ausnehmung 4 mit den Bohrungen 20, 30 sowie die Bohrungen 53c für die Aufnahme der Ventilstößel der Einlassventile 53 und die entsprechenden Bohrungen 51c die Auslassventile 51 betreffend. Die gestrichelte Linie 53e entspricht der durch die jeweils gedachte Zentralachse der beiden Einlassventile 53 resp. der entsprechenden Ventilstössel 55a aufgespannten Ebene, die gestrichelte Ebene 51e stellt die durch die jeweils gedachte Zentralachse der beiden Auslassventile 51 resp. der entsprechenden Ventilstössel 55b aufgespannte Ebene dar. Die aufgespannte Ebene 15 entspricht der durch die Längsachsen 30a, 20a des Vorkammer-Injektors 33 und der Zündkerze 21 aufgespannten Ebene. Letztgenannte Ebene 15 liegt ersichtlich parallel zwischen den beiden Ebenen 51e, 53e, insbesondere mittig zwischen beiden Ebenen 51e, 53e. Figur 5 zeigt den vollständig bestückten Zylinderkopf mit dem Ventiltrieb 50 sowie dem eingesetzten Vorkammer-Modul 10.

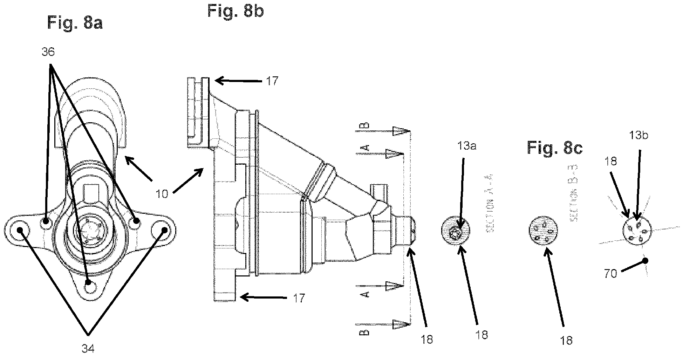

Figur 6 ist eine Explosionsdarstellung zahlreicher hier im Fokus stehender Bauteile im Nahbereich des Zylinderkopfes 1. Die Fixierung des Vorkammer-Moduls 10 am Zylinderkopf 1 erfolgt mittels der beiden Schrauben 19, die durch die Bohrungen 34 (Fig. 8a) des oberen Kragens des Vorkammer-Moduls 10 durchgeführt werden. Durch eine in die Bohrung 30 für die Aufnahme des Vorkammer-Injektors 33 ebenfalls einführbare Haltepratze 32 kann der Vorkammer-Injektor 33 am Vorkammer-Modul 10 fixiert werden. Die Haltepratze 32 wird mittels der drei Schrauben 35 mit dem Vorkammer-Modul 10 fixiert, wobei dazu am Kragen ebenfalls entsprechenden Bohrungen 36 vorgesehen sind (Fig. 8a). Mit dem Bezugszeichen 40 ist hier ein Sensorzugang gezeigt, um einen Sensor 41 im Bereich des Hohlraums 11 innerhalb des Vorkammer-Moduls 10 installieren zu können. Der Sensor 41 kann bspw. ein Sensor zur Erfassung der Druckwerte und/oder Temperaturwerte und/oder des Lambda-Wertes innerhalb der Vorkammer sein.

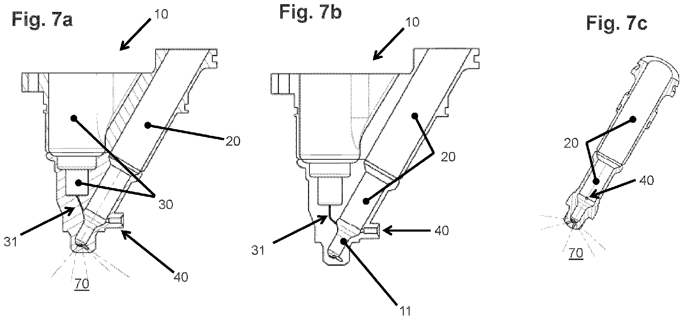

Die Figuren 7a, 7b zeigen unterschiedliche Ausführungen des Vorkammer-Moduls 10, die sich hinsichtlich der Kanalführung des Verbindungskanals 31 voneinander unterscheiden. In der linken Darstellung der Figur 7a ist der Verbindungskanal 31 geradlinig ausgestaltet. Bei der Ausführung der Figur 7b hat der Verbindungskanal 31 stattdessen einen abgewinkelten bzw. einen gekrümmten Kanalverlauf, wobei die Ausgestaltung derart ausgeführt ist, dass durch einen entsprechend gewählten ebenen Schnitt der gesamte Kanalverlauf freigelegt ist. Alternativ zu jenen gezeigten Ausführungsbeispielen kann der Verbindungskanal einen helixartigen Verlauf aufweisen. Durch die helix- bzw. wendelförmige Kanalführung wird während des Betriebs zusätzlich eine Verwirbelung des in den die Vorkammer bildenden Hohlraums 11 eingebrachten Kraftstoffes erzwungen, wodurch die dortige Vermischung mit der darin vorhandenen Luftmenge begünstigt werden kann.

Die Figur 7c zeigt eine Schnittdarstellung des Vorkammer-Moduls 10 entlang der Längsachse 20a, wobei das Vorkammer-Modul 10 bezugnehmend zu derjenigen Orientierung, die in den Figuren 7a, 7b vorliegt um 90° im Uhrzeigersinn gedreht wurde.

Die Strichdarstellungen 70 deuten das Spraybild des in den Hauptbrennraum 7 über die Vorkammer zugeführten Kraftstoffes an. Innerhalb des Hauptbrennraums 7 soll das Spraybild 70 optimalerweise symmetrisch sein, was aufgrund der zum Hauptbrennraum 7 geneigten Ausrichtung des die Vorkammer bildenden Hohlraums 11 jeweils eine individuell darauf abgestimmte Ausrichtung jedes der Überströmkanäle 13 verlangt.

Diese besondere Ausrichtung der Überströmkanäle 13 ist in den Schnittdarstellungen der Figur 8c gezeigt. Die linke Darstellung zeigt hier einen Profilquerschnitt durch die Kuppe 18 im unteren Bereich des Hohlraums 11. Zu sehen sind daher die eng zusammenliegenden Kanalöffnungen 13a innerhalb des Hohlraums 11. Die mittlere Darstellung zeigt einen Profilschnitt nahe der Unterkante der Kuppe 18 und die rechte Darstellung eine Ansicht auf die Unterseite der Kuppe 18, die sich bezugnehmend auf einen betriebsbereiten Einbau an einer Brennraum-Einheit oder eines betriebsbereiten Verbrennungsmotors innerhalb des Hauptbrennraums 7 befindet. Ersichtlich ist hierbei, dass die Ausgangsöffnungen 13b der Überströmkanäle 13 auf einer Ringgruppe der Kuppe 18 angeordnet sind. Dies ist dadurch möglich, dass die Länge der einzelnen Überströmungskanäle 13 unterschiedlich gewählt ist, wodurch die schräge Lage des die Vorkammer bildenden Hohlraums 11 ausgeglichen wird, um das zuvor erwähnte symmetrische Spraybild innerhalb des Hauptbrennraums 7 erzielen zu können.

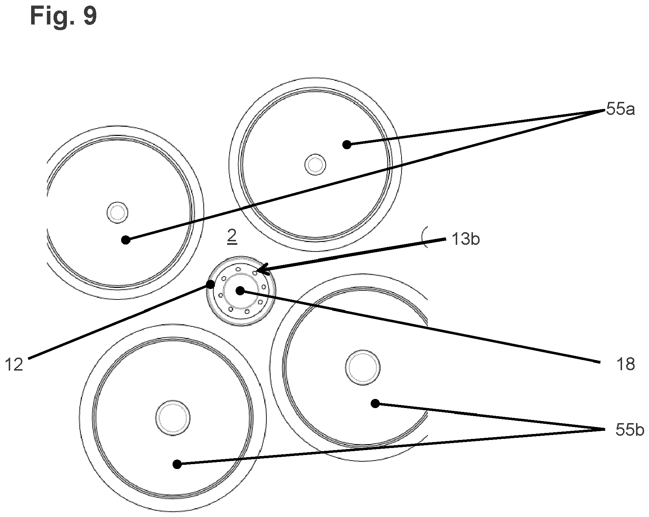

Die Figur 9 zeigt eine Ansicht auf die Unterseite der Kuppe 18 aus einer Perspektive innerhalb des Hauptbrennraums 7. Zu sehen sind die die Unterseiten der Ventilstößel 55a, 55b der Ein- und Auslassventile 51, 53. Aus dieser Perspektive ist die symmetrische und gleichverteilte Anordnung der Öffnungen 13b der Überströmkanäle 13 auf einer gemeinsamen Ringgruppe erkennbar, was maßgeblich für ein symmetrisches Spraybild 70 ist.

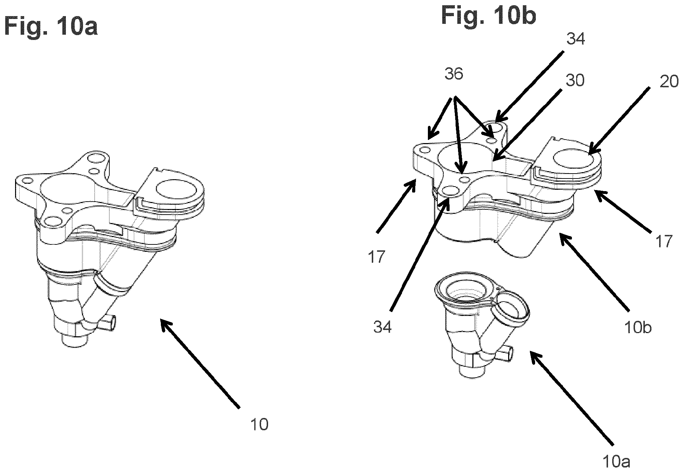

Die Figuren 10a, 10b zeigen explizit eine mehrteilige Ausführung des Vorkammer-Moduls 10. Das Vorkammer-Modul 10 ist in diesem Ausführungsbeispiel zumindest zweiteilig ausgestaltet und besteht aus einem ersten Bauteil 10a, in diesem der die Vorkammer bildende Hohlraum 11, der Verbindungskanal 31 sowie die Überströmkanäle 13 enthalten sind. Der obere Bestandteil 10b umfasst lediglich einen volumenmäßigen Großteil der Ausnehmungen 20, 30 für die Aufnahme der Zündkerze 21 und des Vorkammer-Injektors 33, die Anlageflächen 17 zum Anschlag an den Zylinderkopf 1 sowie die Bohrungen 34, 36. Da insbesondere für das erste Bauteil 10a deutlich höhere Anforderungen an die Maßvorgaben und die Oberflächengüte bestehen, wird das erste Bauteil 10a erfindungsgemäß per 3D-Druck oder mittels eines anderen additiven Verfahrens erzeugt, wohingegen für die Fertigung des weiteren Bauteils 10b ein vorzugsweise ein kostengünstigeres Verfahren zur Anwendung kommt. Denkbar ist es selbstverständlich auch, dass das Vorkammer-Modul 10 aus mehr als zwei Einzelteilen besteht und zusammengesetzt ist.

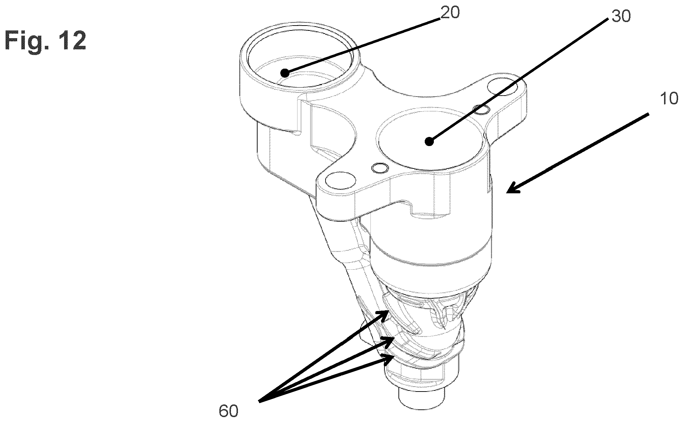

Figur 12 zeigt eine perspektivische Darstellung des Vorkammer-Moduls 10, das im Bereich der durch ein Kühlmedium umströmten äußeren Flächen mit Rippen 60 versehen ist, um hierdurch eine verstärkte Kühlung des die Vorkammer bildenden Hohlraums 11 zu erzielen. Die rippenförmige Ausgestaltung ist vorzugsweise derart gewählt, dass hierdurch nicht nur lediglich eine generelle Oberflächenvergrösserung besteht, sondern darüber hinausgehend derart ausgerichtete Verwirbelungen des umströmenden Kühlmediums erzeugt werden, die das Abtragen von Wärme besonders wirkungsvoll lokal dort begünstigen, wo das Kühlen einen besonders hohen Mehrwert nach sich zieht.

Wie dies bereits wiederholt ausgeführt wurde, bietet die vorstehend ausführlich erläuterte Erfindung den Vorteil, dass basierend auf einer Motorbasis und durch eine vergleichsweise geringfügige Abänderung des Aufbaus ein Sortiment an Verbrennungsmotoren gemäß unterschiedlicher Konzepte zur Verfügung steht. Gemäß Konzept I kann die mittels des Vorkammer-Moduls 10 integrierte aktive Vorkammer lediglich die Funktion eines Zündverstärkers ausüben. Durch Integration des dafür bereitstehenden Vorkammer-Moduls 10 und dessen artgerechter Bestückung kann der Verbrennungsmotor gemäß des Konzepts II betrieben werden. Dem Hauptbrennraum 7 eines derart ausgestatteten Verbrennungsmotors kann lediglich über die aktive Vorkammer Kraftstoff zugeführt werden, weil kein weiterer Kraftstoffpfad vorhanden ist. Existiert ein dazu alternativer Kraftstoffpfad, bspw. über eine Saugrohreinspritzung, so kann der Verbrennungsmotor wahlweise eine Kraftstoffzuführung über die aktive Vorkammer oder alternativ über den zweiten Kraftstoffpfad, bspw. über eine Saugrohreinspritzung vorsehen. Eine entsprechende Ausführungsform, bei der bauartbedingt die Haupteinspritzung zur Abdeckung des im Hauptbrennraum erforderlichen Kraftstoffbedarfs nur innerhalb eines begrenzten Anteils des Motorarbeitsbereichs vollständig entlang des sich über die Vorkammer erstreckenden Kraftstoffpfads erfolgen kann, ist möglich (Konzept IIIa). Auch ist eine Ausführungsform möglich, bei der - trotz der Existenz eines alternativen Kraftstoffpfades (bspw. über eine Saugrohreinspritzung) - der sich über die Vorkammer erstreckende Kraftstoffpfad derart ausgelegt ist, dass der Verbrennungsmotor eine Kraftstoffzuführung innerhalb seines gesamten Drehzahl-Drehmoment-Arbeitsbereichs ausnahmslos über die Vorkammer beziehen kann (Konzept IIIb).

Ausführungs-und bestimmungsgemäß ist bei der letztgenannten Variante, d.h. einer Brennraumeinheit gemäß des Konzepts IIIb in entsprechenden Motor-Betriebssituationen vorgesehen, dass die aktive Vorkammer optional die Funktion eines Zündverstärkers ausübt und/oder optional über die aktive Vorkammer Nebeneinspritzungen erfolgen können, derweil die zum Aufbau des eigentlichen Motordrehmoments dienende Kraftstoffzuführung ausschließlich über den Saugrohreingang erfolgt oder ein erster Anteil der entsprechend erforderlichen Kraftstoffmenge über den Saugrohreingang und ein verbleibender Anteil über die Vorkammer erfolgt. Eine entsprechende Betriebsführung gemäß der beiden letztgenannten Varianten kann auch für eine nach dem Konzept IIIa ausgeführte Brennraumeinheit erfolgen, wenn der momentane Motorbetriebspunkt mit einer entsprechend geringen Kraftstoffzuführung abgedeckt ist, die mengenmäßig unter einer alleinigen Nutzung des sich über die Vorkammer erstreckenden Kraftstoffpfads abgedeckt werden kann.

Voraussetzlich der Gleichheit der entsprechenden Abmasse, bspw. der Kolbenbohrung und dem Abstand zwischen jeweils zwei benachbarten Kolbenbohrungen etc. ermöglicht die Erfindung das Bestücken von Verbrennungsmotoren, die jeweils unterschiedlichen Konzept-Serien zugehörig sind, mit serienübergreifend identisch ausgeführten Zylinderköpfen und zwar unabhängig davon, ob der fertiggestellte Verbrennungsmotor dem Konzept I, II, IIIa oder IIIB entsprechen soll.

Die Erfindung hat zudem den Vorteil, dass ausgehend von einem Basismotor, der nicht mit einer (aktiven) Vorkammer ausgestattet ist, sich die notwendige Modifikation auf die Ersetzung des Zylinderkopfs nebst Einbau des Vorkammer-Moduls beschränkt, wohingegen eine Beibehaltung des Rumpfmotors (Motorblock, Kurbeltrieb, Ventiltrieb) möglich ist. Alle anderen notwendigerweise durchzuführenden Modifikationen beschränken sich auf neu hinzukommende Bauteile; insbesondere die aktive Vorkammer und ihre Haltvorrichtung sowie der Substitution des Kraftstoffzuführungspfades oder einer Hinzunahme eines zweiten Kraftstoffzuführungspfades. Weitere Änderungen an der Peripherie können sinnvoll sein, um die Vorteilhaftigkeit eines entsprechenden erfindungsgemäßen Verbrennungsmotors besser ausnutzen zu können; etwa eine Änderung an der Luftstrecke oder einer optionalen weiteren Abänderung des Kraftstoffpfads, um bspw. eine Kraftstoffbereitstellung unter einem höheren Druckniveau zu ermöglichen.

**Bezugszeichenliste:**

| | |
|---|---|
| Zylinderkopf | 1 |
| Flammplatte | 2 |
| Kühlkanal | 3 |
| Aufnahme für Vorkammer-Modul | 4 |
| Luftauslass | 5 |
| Lufteinlass | 6 |
| Hauptbrennraum | 7 |
| Längsachse Hauptbrennraum | 11a |
| Zylinderkopfdeckel | 8 |
| Kolben | 9 |
| Vorkammer-Modul | 10 |
| Erster Bestandteil des Moduls | 10a |
| Zweiter Bestandteil des Moduls | 10b |
| Hohlraum | 11 |
| Längsachse Hohlraum | 11a |
| Flanschring | 12 |
| Überströmkanäle | 13 |
| Öffnungen der Überströmkanäle | 13a |
| Austrittsöffnungen der Überströmkanäle | 13b |
| Aufweitung | 14 |
| Aufgespannte Ebene der Längsachsen der Aufnahmen 20, 30 | 15 |
| Laufbuchse | 16 |
| Anlagefläche | 17 |
| Vorkammer-Kuppe | 18 |
| Schrauben für Fixierung des Moduls am Zylinderkopf | 19 |
| Aufnahme Zündvorrichtung | 20 |
| Längsachse Aufnahme für Zündvorrichtung | 20a |
| Zündkerze | 21 |
| Führungshülse | 22, 22a |
| Zylinderkopfdichtung | 23 |
| Aufnahme für Vorkammer-Injektor | 30 |
| Längsachse der Aufnahme für Vorkammer-Injektor | 30a |
| Verbindungskanal | 31 |
| Haltepratze | 32 |
| Vorkammer-Injektor | 33 |
| Bohrungen für Schrauben 19 | 34 |
| Schrauben für Fixierung der Haltepratze am Modul | 35 |
| Bohrungen für Schrauben 35 | 36 |
| Sensoraufnahme | 40 |
| Sensor | 41 |
| Ventiltriebe | 50 |
| Auslassventile | 51 |
| Ventilbrücke der Auslassventile | 51a |
| Kipphebel der Auslassventile | 51b |
| Bohrungen für Ventilstößel der Auslassventile | 51c |
| Aufgespannte Ebene der Bohrungen 51c | 51e |
| Einlassventile | 53 |
| Ventilbrücke der Einlassventile | 53a |
| Kipphebel der Einlassventile | 53b |
| Bohrungen für Ventilstößel der Einlassventile | 53c |
| Aufgespannte Ebene der Bohrungen 53c | 53e |
| Ventilstößel der Auslassventile | 55a |
| Ventilstößel der Einlassventile | 55b |
| Kühlrippen | 60 |
| Spraybild | 70 |

## Patentansprüche

1. Verbrennungsmotor mit Vorkammer, insbesondere einen Gasmotor, umfassend:
einen Hauptbrennraum (7) in einem Zylinder des Verbrennungsmotors zum Verbrennen eines Kraftstoff-Luftgemisches, und
eine aktive Vorkammer mit einer darin hineinragenden Zündvorrichtung (21) zur Zündung eines in der Vorkammer befindlichen Kraftstoff-Luft-Gemisches und mit einem der Vorkammer Kraftstoff zuführenden Vorkammer-Injektor (33), wobei wenigstens ein Vorkammer-Modul (10) vorgesehen ist, das als zum Zylinderkopf (1) separates Bauteil ausgeführt und in den Zylinderkopf (1) eingesetzt ist, und wobei das Vorkammer-Modul (10) einen die Vorkammer bildendenden Hohlraum (11) mit wenigstens einem Überströmkanal (13) zur fluidischen Verbindung von Vorkammer und Hauptbrennraum (7) umfasst,
**dadurch gekennzeichnet,**
**dass** das Vorkammer-Modul (10) zur funktionsgerechten Fixierung des Vorkammer-Injektors (33) und/oder der Zündvorrichtung (21) dient und die Längsachse (20a) einer der in das Vorkammer-Modul (10) eingesetzten Komponenten aus Vorkammer-Injektor (33) oder Zündvorrichtung (21) schräg zur Längsachse (7a) des Hauptbrennraums (7) verläuft.

2. Verbrennungsmotor nach Anspruch 1, **dadurch gekennzeichnet, dass** die schräg verlaufende Längsachse (20a) einer der Komponenten aus Vorkammer-Injektor (33) oder Zündvorrichtung (21) sowie die Längsachse (7a) des Hauptbrennraums (7) einen Winkel bilden, der im Bereich zwischen 10° und 60°, bevorzugt im Bereich zwischen 20° und 50°, besonders bevorzugt zwischen 25° und 40° liegt.

3. Verbrennungsmotor nach Anspruch 1 oder 2, **dadurch gekennzeichnet, dass** sich die Längsachse (20a) einer der Komponenten Vorkammer-Injektor (33) oder Zündvorrichtung (21) und die Längsachse (7a) des Hauptbrennraums (7) schneiden, wobei vorzugsweise die Längsachse (30a) der anderen Komponente parallel, bevorzugt deckungsgleich zur Längsachse (7a) des Hauptbrennraums (7) ist.

4. Verbrennungsmotor nach Anspruch 3, **dadurch gekennzeichnet, dass** die Längsachse (30a) des Vorkammer-Injektors (33) parallel, bevorzugt deckungsgleich zur Längsachse (7a) des Hauptbrennraums (7) ist.

5. Verbrennungsmotor nach einem der vorstehenden Ansprüche, **dadurch gekennzeichnet, dass** die Längsachse (11a) des die Vorkammer bildenden Hohlraums (11) deckungsgleich mit der Längsachse (20a) der Zündvorrichtung (21) bzw. einer Bohrung (20) zur Aufnahme der Zündvorrichtung innerhalb des Vorkammer-Moduls (10) ist.

6. Verbrennungsmotor nach einem der vorstehenden Ansprüche, **dadurch gekennzeichnet, dass** die Längsachse (30a) des Vorkammer-Injektors (33) und die Längsachse (20a) der Bohrung (20) zur Aufnahme der Zündvorrichtung (21) eine Ebene (15) definieren, die parallel zu einer durch die Bewegungsachsen der Brennraum-Einlassventilstössel (55b) aufgespannten Ebene (53e) und/oder parallel zu einer durch die Bewegungsachsen der Brennraum-Auslassventilstössel (55a) aufgespannten Ebene (51e) liegt.

7. Verbrennungsmotor nach einem der vorstehenden Ansprüche, **dadurch gekennzeichnet, dass** innerhalb des Vorkammer-Moduls (10) ein Verbindungskanal (31) eingearbeitet ist, über den der aus dem Vorkammer-Injektor (33) austretende Kraftstoff in den die Vorkammer bildende Hohlraum (11) gelangt, wobei der Verbindungskanal (31) in Längsrichtung bevorzugt derart ausgeformt ist, so dass der in den Hohlraum (11) eintretende Kraftstoffstrahl darin einen Wirbel erzeugt.

8. Verbrennungsmotor nach Anspruch 7, **dadurch gekennzeichnet, dass** die Innenwand des Verbindungskanals (31) zumindest abschnittsweise, vorzugsweise innerhalb eines zusammenhängenden Längenabschnitts eine nicht-zylindrische Kontur, vorzugsweise eine konische Kontur aufweist und bevorzugt der verbleibende Längenbereich eine zylindrische Kontur hat.

9. Verbrennungsmotor nach einem der vorstehenden Ansprüche 7 oder 8, **dadurch gekennzeichnet, dass** der Verbindungskanal (31) zumindest abschnittsweise einen gekrümmten Verlauf aufweist, wobei sich die Bahnkurve über die sich die Krümmung erstreckt vorzugsweise in einer Ebene befindet und/oder der Verbindungskanal (31) zumindest abschnittsweise einen helixartigen Verlauf in Längsrichtung aufweist.

10. Verbrennungsmotor nach einem der vorstehenden Ansprüche, **dadurch gekennzeichnet, dass** das Vorkammer-Modul (10) ein oder mehrteilig ausgeführt ist, wobei bei einer mehrteiligen Ausführung Teilbereiche des Vorkammer-Moduls (10), an deren Maßeinhaltung und Oberflächengüte höhere Präzisionsanforderungen gestellt werden, bevorzugt in einem gemeinsamen Bauteil (10a) des Vorkammer-Moduls (10) konzentriert sind, besonders bevorzugt sind der Hohlraum (11) inklusive die Überströmkanäle (13) und ein Verbindungskanal (31) vom Vorkammer-Injektor (33) zum Hohlraum (11) in einem gemeinsamen Bauteil (10a) ausgebildet.

11. Verbrennungsmotor nach einem der vorstehenden Ansprüche, **dadurch gekennzeichnet, dass** die Zündvorrichtung (21) von außen ohne das Entfernen des Zylinderkopfdeckels (8) für einen Austausch zugänglich ist, wobei sich der aus dem Zylinderkopf (1) herausragende Teilbereich der Zündvorrichtung (21) vorzugsweise außerhalb einer durch die Bewegungsachsen der Brennraum-Einlassventilstössel (55b) und Brennraum-Auslassventilstössel (55a) aufgespannten Fläche befindet.

12. Verbrennungsmotor nach einem der vorstehenden Ansprüche, **dadurch gekennzeichnet, dass** die Längsachse des die Vorkammer bildenden Hohlraums (11) die Längsachse des Hauptbrennraums (7) schneidet.

13. Verbrennungsmotor nach Anspruch 12, **dadurch gekennzeichnet, dass** mehrere Überströmkanäle (13) mit unterschiedlicher Kanallänge vorgesehen sind und/oder zumindest ein Teil der Überströmkanäle (13) die Vorkammerwand in den Hauptbrennraum (7) nicht senkrecht, sondern schräg durchdringt, um idealerweise eine Verwirbelung des durch die Überströmkanäle (13) geführten Fluids und/oder der Zündfackeln zu bewirken.

14. Verbrennungsmotor nach einem der Ansprüche 12 oder 13, **dadurch gekennzeichnet, dass** die dem Hauptbrennraum (7) zugewandten Austrittsöffnungen (13b) der Überströmkanäle (13) eine gemeinsame Ringgruppe bildend auf einer in den Hauptbrennraum (7) hineinragenden Kuppe (18) des Vorkammer-Moduls (10) austreten.

15. Verbrennungsmotor nach einem der vorstehenden Ansprüche, **dadurch gekennzeichnet, dass** die Zündvorrichtung (21) von der Lufteintrittsseite (6) des Zylinderkopfes (1) in den Verbrennungsmotor eingebracht ist.

16. Verbrennungsmotor nach einem der vorstehenden Ansprüche, **dadurch gekennzeichnet, dass** zwischen dem Vorkammer-Modul (10) im Bereich des wenigstens einen Überströmkanals (13) und der Auflagefläche des Vorkammer-Moduls (10) am Zylinderkopf (1), insbesondere im Bereich der Flammplatte (2), ein das Vorkammer-Modul (10), insbesondere die Kuppe (18), umgebender Sitzring, insbesondere in der Ausführung eines Flanschrings (12) angeordnet ist.

17. Verbrennungsmotor nach einem der vorstehenden Ansprüche, **dadurch gekennzeichnet, dass** der die Vorkammer ausbildende Hohlraum (11) eine nicht rotationssymmetrische Geometrie aufweist, wobei insbesondere im Nahbereich der Kraftstoffzuführung, bevorzugt im Mündungsbereich des Verbindungskanals (31), eine volumenvergrössernde partielle Aufweitung (14) des Hohlraums (11) vorgesehen ist.

18. Verbrennungsmotor nach einem der vorstehenden Ansprüche, **dadurch gekennzeichnet, dass** der Vorkammer-Injektor (33) mittels einer Haltepratze (32) am Vorkammer-Modul (10) angebracht ist, wobei die Haltepratze (32) am Vorkammer-Modul (10) lösbar verschraubt ist.

19. Verbrennungsmotor nach einem der vorstehenden Ansprüche, **dadurch gekennzeichnet, dass** das Vorkammer-Modul (10) wenigstens eine Sensoraufnahme (40) umfasst, in diese ein Sensor (41) zur Erfassung wenigstens eines Zustandswertes innerhalb der Vorkammer einbringbar ist, wobei der Sensor (41) vorzugsweise zur Druck- und/oder Temperaturmessung und/oder zur Messung eines Lambdawertes innerhalb der Vorkammer geeignet ist.

20. Verbrennungsmotor nach einem der vorstehenden Ansprüche, **dadurch gekennzeichnet, dass** ein oder mehrere, ein Kühlmedium führende Kühlkanäle (3) im Zylinderkopf (1) derart ausgeformt sind, wodurch ein darin strömendes Kühlmedium eine Außenwand des Vorkammer-Moduls (10) umströmt, insbesondere einen den Hohlraum (11) umschließenden Wandbereich des Vorkammer-Moduls (10).

21. Verbrennungsmotor nach Anspruch 20, **dadurch gekennzeichnet, dass** an der Außenwand des Vorkammer-Moduls (10) im Bereich der umgebenden Kühlkanäle (3) ein oder mehrere Rippen (60) ausgeprägt sind.

22. Verbrennungsmotor nach einem der vorstehenden Ansprüche, **dadurch gekennzeichnet, dass** der Verbrennungsmotor mit einer Betriebsart betreibbar ist, gemäß dieser die aktive Vorkammer ausschließlich als Zündverstärker dient und/oder eine Direkteinspritzung von Kraftstoff in den Hauptbrennraum (7) über die aktive Vorkammer erfolgt und/oder wenigstens ein alternativer Kraftstoffzuführungspfad in den Hauptbrennraum (7) besteht, bspw. eine Saugrohreinspritzung, und der Kraftstoff selektiv über die Vorkammer und/oder den alternativen Kraftstoffpfad in den Hauptbrennraum (7) einspritzbar ist, idealerweise in Abhängigkeit der aktuellen Motorlast.

23. Verbrennungsmotor nach Anspruch 22, **dadurch gekennzeichnet, dass** der Verbrennungsmotor im Fall einer möglichen Kraftstoffzuführung über die aktive Vorkammer und wenigstens einen alternativen Kraftstoffzuführungspfad in den Hauptbrennraum (7), bspw. über eine Saugrohreinspritzung, konfiguriert ist, um über die aktive Vorkammer zusätzlich zu ihrer originären Vorkammerfunktion Voreinspritzungen und/oder Nacheinspritzungen vorzunehmen.

24. Verbrennungsmotor nach Anspruch 22, **dadurch gekennzeichnet, dass** der Verbrennungsmotor, dessen aktive Vorkammer ausschließlich als Zündverstärker dient, wenigstens zwei separate Kraftstoffspeicher umfasst, um der aktiven Vorkammer und dem Hauptbrennraum (7) unterschiedliche Kraftstoffe zuführen zu können.
